# EUROPEAN PATENT APPLICATION

(11) **EP 4 819 236 A1**
(43) Date of publication of application: **07.10.2026**
(21) Application number: 26160524.0
(22) Date of filing: 24.02.2026
(51) Int. Cl.: H01M 4/36, H01M 4/525, C01G 53/42

(54) **COMPOSITE POSITIVE ELECTRODE ACTIVE MATERIALS, METHODS OF PREPARING THE COMPOSITE POSITIVE ELECTRODE ACTIVE MATERIALS, AND RECHARGEABLE LITHIUM BATTERIES**

(30) Priority: 31.03.2025 KR 20250041475
(71) Applicant: SAMSUNG SDI CO., LTD., Yongin-si, Gyeonggi-do 17084 (KR)
(72) Inventor: RYU, Jaemin, 17084 Yongin-si (KR); CHANG, Donggyu, 17084 Yongin-si (KR); JANG, Jungsue, 17084 Yongin-si (KR); CHOO, Sungho, 17084 Yongin-si (KR); AN, Jisang, 17084 Yongin-si (KR); PARK, Jingyu, 17084 Yongin-si (KR); LEE, Jiho, 17084 Yongin-si (KR)
(74) Representative: Maiwald GmbH

(57) **Abstract**

A composite positive electrode active material may include a first positive electrode active material including a first lithium nickel-based composite oxide and a second positive electrode active material including a second lithium nickel-based composite oxide, which has an average particle diameter D50 smaller than an average particle diameter D50 of the first positive electrode active material. The first lithium nickel-based composite oxide may include tungsten, aluminum, and boron. An amount of the aluminum in the first positive electrode active material may be from about 0.1 mol% to about 1.45 mol% based on 100 mol% of a total metal, excluding lithium, in the first positive electrode active material. An amount of the boron in the first positive electrode active material may be from about 1.05 mol% to about 2 mol% based on 100 mol% of the total metal, excluding lithium, in the first positive electrode active material.

## Description

### BACKGROUND

### 1. Field

The present disclosure relates to composite positive electrode active materials, methods of preparing composite positive electrode active materials, positive electrodes having composite positive electrode active materials, and rechargeable lithium batteries including positive electrodes having composite positive electrode active materials.

### 2. Description of the Related Art

A portable information device such as a cell phone, a laptop, smart phone, and the like has used a rechargeable lithium battery having high energy density and easy portability as a driving power source. Recently, research has been actively conducted for creating a rechargeable lithium battery with high energy density to be used as a driving power source for hybrid or electric vehicles or as a power source for power storage.

Various positive electrode active materials have been researched to create rechargeable lithium batteries for the above-described uses. Among those positive electrode active materials researched, lithium nickel-based composite oxides (e.g., lithium nickel manganese cobalt oxide, lithium nickel cobalt aluminum oxide, etc.), lithium cobalt oxide, and lithium iron phosphate-based compounds are used as positive electrode active materials. Among these above-listed positive electrode active materials, the lithium nickel-based composite oxides can realize high energy density and have been actively developed recently. However, structural deterioration due to charging or discharging of the rechargeable lithium battery, surface side reactions with the electrolyte, and a formation of particle cracks are issues that limit the use of lithium nickel-based composite oxides as positive electrode active materials in rechargeable lithium batteries by reducing efficiency of the rechargeable lithium battery and reducing a cycle-life of the rechargeable lithium battery.

### SUMMARY

The present disclosure provides a composite positive electrode active material.

A composite positive electrode active material according to some embodiments of the present disclosure may include a first positive electrode active material including a first lithium nickel-based composite oxide and a second positive electrode active material including a second lithium nickel-based composite oxide having an average particle diameter D₅₀ smaller than an average particle diameter D₅₀ of the first positive electrode active material. The first lithium nickel-based composite oxide may include tungsten, aluminum, and boron. An amount of the aluminum in the first positive electrode active material may be from about 0.1 mol% to about 1.45 mol% based on 100 mol% of a total metal, excluding lithium, in the first positive electrode active material. An amount of the boron in the first positive electrode active material may be from about 1.05 mol% to about 2 mol% based on 100 mol% of the total metal, excluding lithium, in the first positive electrode active material.

In some embodiments, the first lithium nickel-based composite oxide may be represented by Chemical Formula 1:

[Chemical Formula 1] Liₐ₁Niₓ₁M¹_{y1}W_{w1}Alₖ₁Bₕ₁O_{2-b1}X_{b1}.

In Chemical Formula 1, 0.9≤a1≤1.2, 0.3≤x1≤0.9884, 0≤y1≤0.6884, 0.0001≤w1≤0.001, 0.001≤k1≤0.0145, 0.0105≤h1≤0.02, 0.9≤x1+y1+w1+k1+h1≤1.1, and 0≤b1≤0.1. M¹ may be Ba, Ca, Ce, Co, Cr, Cu, Fe, Mg, Mn, Mo, Nb, Si, Sn, Sr, Ta, Ti, V, Y, Zn, Zr, or a combination thereof. X may be F, P, S, or a combination thereof. An amount of nickel in the first lithium nickel-based composite oxide based on 100 mol% of a total metal, excluding lithium, in the first lithium nickel-based composite oxide may be greater than or equal to about 80 mol%. And/or, the first lithium nickel-based composite oxide may be doped with tungsten, and a doping amount of the tungsten in the first lithium nickel-based composite oxide may be from about 0.01 mol% to about 0.1 mol% based on 100 mol% of a total metal, excluding lithium, in the first lithium nickel-based composite oxide.

In some embodiments, the first positive electrode active material may include a first lithium nickel-based composite oxide and may be in a form of secondary particles. A plurality of primary particles may be agglomerated in each secondary particle. The aluminum and boron may be doped in an internal portion of the first lithium nickel-based composite oxide and may be further included in a coating layer on a surface of each secondary particle. The first positive electrode active material may have an amount of aluminum from about 0.1 at% to about 10 at% on the surface of each secondary particle based on a total metal, excluding lithium, on the surface of each secondary particle. The first positive electrode active material may have an amount of boron from about 0.1 at% to about 10 at% on the surface of each secondary particle based on a total metal excluding lithium on the surface of each secondary particle. And/or, the coating layer may include an aluminum-containing material including aluminum metal, aluminum oxide, aluminum hydroxide, lithium aluminum oxide, or a combination thereof and a boron-containing compound including boron oxide, boric acid, lithium borate, or a combination thereof. And/or, the first positive electrode active material may further include a grain boundary coating portion located on the surface of the primary particles internal to the secondary particles, the grain boundary coating portion containing aluminum and boron. And/or, an average particle diameter D₅₀ of the secondary particles may be from about 10 µm to about 25 µm.

In some embodiments, the second lithium nickel-based composite oxide may be represented by Chemical Formula 4:

[Chemical Formula 4] Liₐ₄Niₓ₄M⁶_{y4}M⁷_{z4}O_{2-b4}X_{b4}.

In Chemical Formula 4, 0.9≤a4≤1.8, 0.3≤x4≤1, 0≤y4≤0.7, 0≤z4≤0.7, 0.9≤x4+y4+z4≤1.1, and 0≤b4≤0.1. M⁶ and M⁷ may be different from each other and may be Al, B, Ba, Ca, Ce, Co, Cr, Cu, Fe, Mg, Mn, Mo, Nb, Si, Sn, Sr, Ta, Ti, V, W, Y, Zn, Zr, or a combination thereof. X may be F, P, S, or a combination thereof.

In some embodiments, the second positive electrode active material may be in a form of single particles. An average particle diameter D₅₀ of the single particles may be from about 0.1 µm to about 9 µm.

In some embodiments, the composite positive electrode active material may include the first positive electrode active material in an amount from about 50 wt% to about 95 wt% based on 100 wt% of the composite positive electrode active material. The composite positive electrode active material may include the second positive electrode active material in an amount from about 5 wt% to about 50 wt% based on 100 wt% of the composite positive electrode active material.

A method of preparing a composite positive electrode active material according to some embodiments of the present disclosure may include creating a mixture by mixing a tungsten-doped nickel-based precursor, a lithium raw material, an aluminum raw material, and a boron raw material to obtain a mixture; firing the mixture at a temperature of greater than about 720°C for preparing a first positive electrode active material such that the first positive electrode active material may include a first lithium nickel-based composite oxide including tungsten, aluminum, and boron; and mixing the first positive electrode active material and a second positive electrode active material including a second lithium nickel-based composite oxide having an average particle diameter D₅₀ smaller than an average particle diameter D₅₀ of the first positive electrode active material. Aluminum of the aluminum raw material may be introduced in the mixture in an amount from about 0.1 parts by mole to about 1.45 parts by mole based on 100 parts by mole of a total metal in the tungsten-doped nickel-based precursor. Boron of the boron raw material may be introduced in the mixture in an amount from about 1.05 parts by mole to about 2 parts by mole based on 100 parts by mole of a total metal in the tungsten-doped nickel-based precursor. The aluminum of the first positive electrode active material derives from the aluminum raw material. The boron of the first positive electrode active material derives from the boron raw material.

In some embodiments, the tungsten-doped nickel-based precursor may include a tungsten-doped nickel-based oxide, a tungsten-doped nickel-based hydroxide, or a combination thereof.

In some embodiments, mixing the tungsten-doped nickel-based precursor may include mixing a tungsten-doped nickel-based precursor having a tungsten-doped nickel-based oxide represented by Chemical Formula 7:

[Chemical Formula 7] Niₓ₇M¹¹_{y7}M¹²_{z7}W_{w7}O₂.

In Chemical Formula 7, 0.3≤x7≤1, 0≤y7≤0.7, 0≤z7≤0.7, and 0.0001≤w7≤0.001, 0.9≤x7+y7+z7+w7≤1.1. M¹¹ and M¹² may be different from each other and may be each Al, B, Ba, Ca, Ce, Co, Cr, Cu, Fe, Mg, Mn, Mo, Nb, Si, Sn, Sr, Ta, Ti, V, Y, Zn, Zr, or a combination thereof.

In some embodiments, mixing the tungsten-doped nickel-based precursor may include mixing a tungsten-doped nickel-based precursor having the following properties an amount of nickel in the tungsten-doped nickel-based precursor may be greater than or equal to about 80 mol% based on 100 mol% of a total metal in the tungsten-doped nickel-based precursor and a doping amount of the tungsten in the tungsten-doped nickel-based precursor may be from about 0.01 mol% to about 0.1 mol% based on 100 mol% of the total metal in the tungsten-doped nickel-based precursor.

In some embodiments, firing the mixture may be carried out in an oxidizing gas atmosphere at about 730°C to about 1000°C.

In some embodiments, after firing the mixture, the method may further include washing a product resulting from the mixture after firing and performing an additional firing of the mixture at a temperature from about 500°C to about 730°C.

In some embodiments, mixing the first positive electrode active material and the second positive electrode active material may include creating a mixing weight ratio of the first positive electrode active material and the second positive electrode active material that is, respectively, from about 50:50 to about 95:5.

A rechargeable lithium battery according to some embodiments of the present disclosure may include a positive electrode, a negative electrode, and an electrolyte. The positive electrode may include a positive electrode current collector and a positive electrode active material layer disposed on the positive electrode current collector, the positive electrode active material layer including the composite positive electrode active material discussed above.

However, the technical problems to be solved by the present disclosure are not limited to the above-described problem, and other problems not mentioned will be clearly understood by those skilled in the art from the detailed description set forth below.

### BRIEF DESCRIPTION OF THE DRAWINGS

FIGS. 1 to 4 are schematic views showing rechargeable lithium batteries according to some embodiments of the present disclosure.
FIGS. 5A to 5C are a schematic view showing plate-shaped primary particles according to some embodiments of the present disclosure.
FIG. 6 is a schematic view showing a radial structure of a secondary particle according to some embodiments of the present disclosure.
FIG. 7 is a schematic view showing a cross-sectional structure of a secondary particle according to some embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, a thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting a number of particles for each particle size range, and calculating the average particle diameter value from these values and data. Unless otherwise defined, the average particle diameter D₅₀ may mean the diameter of particles having a cumulative volume of 50 volume% in the particle size distribution. As used herein, when a definition is not otherwise provided, the average particle diameter D₅₀ means a diameter of particles having a cumulative volume of 50 volume% in the particle size distribution that is obtained by measuring the size (diameter or long axis length) of 20 particles at random in a scanning electron microscope image, each particle being assumed to have a spherical shape and the measured size being converted into an equivalent spherical diameter.

"Or" is not to be construed as an exclusive meaning; for example, "A or B" is construed to include A, B, A+B, and the like.

"Metal" is interpreted as a concept including ordinary metals, transition metals and metalloids (semi-metals).

### Composite Positive Electrode Active Material

Some embodiments provide a composite positive electrode active material including a first positive electrode active material including a first lithium nickel-based composite oxide including tungsten, aluminum, and boron, and a second positive electrode active material including a second lithium nickel-based composite oxide and having an average particle diameter D₅₀ smaller than an average particle diameter D₅₀ of the first positive electrode active material, wherein an amount of aluminum is from about 0.1 mol% to about 1.45 mol% based on 100 mol% of the total metal excluding lithium in the first positive electrode active material, and an amount of boron is from about 1.05 mol% to about 2 mol% based on 100 mol% of the total metal excluding lithium in the first positive electrode active material.

To achieve high energy density, lithium nickel-based composite oxide positive electrode active materials with high specific capacity are mainly used. When using a lithium nickel-based composite oxide, as the charge and discharge cycles progress, an arrangement of the primary particles becomes misaligned due to a repeated volume expansion of the crystal structure of the lithium nickel-based composite oxide, causing gaps between the primary particles to widen. This causes a large difference in a degree of shrinkage and expansion of the secondary particles and shrinkage and expansion of the positive electrode including the secondary particles. This causes structural cracking and destruction of secondary particles and the positive electrode, induces disconnection of the electrochemical charge transfer network, causes charge imbalance, increases an area for side reactions with the electrolyte, and causes deterioration of the charge/discharge cycle-life of the battery.

To address the above problems, there are attempts to dope a positive electrode active material and/or coat the positive electrode active material with various elements. Further, there is a method of doping lithium nickel-based composite oxide with tungsten, and in the case of tungsten, it exists as a hexavalent ion (W⁶⁺), so it is stable in terms of electronic configuration. When this is doped into a lithium nickel-based composite oxide, structural instability caused by peroxide formation of the transition metal may be alleviated by suppressing the oxidation of oxygen ions (O²⁻), and in particular, thermal stability may be improved by suppressing a release of lattice oxygen caused by excessive oxidation of nickel ions in a high nickel-based positive electrode active material. In particular, by doping with tungsten, lithium nickel-based composite oxides may effectively form a radial structure. Additionally, the aluminum and boron coating may suppress side reactions resulting from contact between the positive electrode active material and the electrolyte and may release the transition metal of the lithium nickel-based composite oxide from being eluted into the electrolyte.

In addition to tungsten doping, doping and/or coating with aluminum and boron may strengthen the bonding strength at the grain boundary, thereby alleviating internal stress and volume changes that occur during repeated charge and discharge, thereby reducing the occurrence of microcracks.

Furthermore, by using a bimodal type composite positive electrode active material in which a first positive electrode active material is doped with tungsten as described above and is simultaneously doped and coated with aluminum and boron, and a second positive electrode active material having a smaller average particle diameter D₅₀ than the first positive electrode active material is mixed together, the gaps between the first positive electrode active materials may be filled with the second positive electrode active material having a relatively smaller average particle diameter D₅₀, so that an integration density of the positive electrode active material within a unit volume may be improved, thereby improving an energy density per unit volume of the rechargeable lithium battery.

### First Positive Electrode Active Material

The first positive electrode active material includes a first lithium nickel-based composite oxide. The first lithium nickel-based composite oxide includes tungsten, aluminum, and boron, i.e., in addition to lithium and nickel, it includes tungsten, aluminum, and boron. Here, "including" means doping into the internal portion of the first lithium nickel-based composite oxide or coating on the surface of the first positive electrode active material particle (e.g., secondary particle). The composite positive electrode active material has improved structural stability and suppression of gas generation by including the first positive electrode active material.

The first lithium nickel-based composite oxide may be represented by Chemical Formula 1.

[Chemical Formula 1] Liₐ₁Niₓ₁M¹_{y1}W_{w1}Alₖ₁Bₕ₁O_{2-b1}X_{b1}.

In Chemical Formula 1, 0.9≤a1≤1.2, 0.3≤x1≤0.9884, 0≤y1≤0.6884, 0.0001≤w1≤0.001, 0.001≤k1≤0.0145, 0.0105≤h1≤0.02, 0.9≤x1+y1+w1+k1+h1≤1.1, and 0≤b1≤0.1. Further, M¹ is Ba, Ca, Ce, Co, Cr, Cu, Fe, Mg, Mn, Mo, Nb, Si, Sn, Sr, Ta, Ti, V, Y, Zn, Zr, or a combination thereof, and X is F, P, S, or a combination thereof.

In Chemical Formula 1, 0.6≤x1≤0.9884, 0≤y1≤0.3884, 0.0001≤w1≤0.001, 0.001≤k1≤0.0145, and 0.0105≤h1≤0.02; 0.8≤x1≤0.9884, 0≤y1≤0.1884, 0.0001≤w1≤0.001, 0.001≤k1≤0.0145, and 0.0105≤h1≤0.02; or 0.9≤x1≤0.9784, 0.01≤y1≤0.0884, 0.0001≤w1≤0.001, 0.001≤k1≤0.0145, and 0.0105≤h1≤0.02.

The first lithium nickel-based composite oxide may be represented by Chemical Formula 2 as an example.

[Chemical Formula 2] Liₐ₂Niₓ₂Co_{y2}M²_{z2}W_{w2}Alₖ₂Bₕ₂O_{2-b2}X_{b2}.

In Chemical Formula 2, 0.9≤a2≤1.2, 0.8≤x2≤0.9884, 0<y2≤0.1884, 0≤z2≤0.1884, 0.0001≤w2≤0.001, 0.001≤k2≤0.0145, 0.0105≤h2≤0.02, 0.9≤x2+y2+z2+w2+k2+h2≤1.1, and 0≤b2≤0.1. Further, M² is Ba, Ca, Ce, Cr, Cu, Fe, Mg, Mn, Mo, Nb, Si, Sn, Sr, Ta, Ti, V, Y, Zn, Zr, or a combination thereof, and X is F, P, S, or a combination thereof.

In Chemical Formula 2, 0.9≤x2≤0.9884, 0<y2≤0.0884, 0≤z2≤0.0884, 0.0001≤w2≤0.001, 0.001≤k2≤0.0145, and 0.0105≤h2≤0.02.

In some embodiments, in the first lithium nickel-based composite oxide, the amount of nickel based on 100 mol% of a total metal excluding lithium may be greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol% and may be less than or equal to about 99 mol%, for example, less than or equal to about 98 mol%, in the high nickel-based positive electrode active material. The high nickel-based positive electrode active material may achieve high capacity and may be applied to high-capacity, high-density rechargeable lithium batteries.

The first lithium nickel-based composite oxide may be doped with tungsten. In the case of the tungsten, it is doped in the internal portion of the first lithium nickel-based composite oxide, but unlike aluminum and boron described later, it may not be included in the coating layer.

In the first lithium nickel-based composite oxide, the doping amount of the tungsten may be from about 0.01 mol% to about 0.1 mol%, for example, from about 0.02 mol% to about 0.1 mol%, from about 0.03 mol% to about 0.1 mol%, or from about 0.04 mol% to about 0.1 mol% based on 100 mol% of a total metal excluding lithium. When the doping amount of tungsten satisfies the above range, structural instability caused by peroxide of the transition metal may be alleviated by suppressing an oxidation of oxygen ions (O²⁻), and, in particular, the thermal stability may be improved by suppressing the release of lattice oxygen caused by excessive oxidation of nickel ions in a high nickel-based positive electrode active material.

Additionally, an amount of tungsten may be from about 0.01 wt% to about 2 wt%, for example, from about 0.03 wt% to about 1.75 wt%, from about 0.05 wt% to about 1.5 wt%, from about 0.07 wt% to about 1.25 wt%, or from about 0.08 wt% to about 0.1 wt% based on 100 wt% of a total metal excluding lithium in the first lithium nickel-based composite oxide. By designing the doping amount of tungsten within the above ranges, a radial structure may be effectively formed, facilitating lithium diffusion and, thus, facilitating manufacture of a battery with improved cycle-life characteristics.

The first positive electrode active material is in the form of secondary particles in which a plurality of primary particles are agglomerated as described below, and the aluminum and the boron may be independently doped in the internal portion of the first lithium nickel-based composite oxide, while simultaneously being further included in a coating layer on the surface of the secondary particles of the first positive electrode active material. The first positive electrode active material is doped with aluminum and boron in the internal portion the first lithium nickel-based composite oxide, and at the same time, aluminum and boron are further included in the coating layer on the surface of the secondary particles, thereby lowering resistance at the surface of the positive electrode active material, and improving capacity and improving cycle-life characteristics according to repeated charge and discharge cycles.

In the first positive electrode active material, an amount of aluminum based on 100 mol% of a total metal excluding lithium may be from about 0.1 mol% to about 1.45 mol% and may be, for example, from about 0.2 mol% to about 1.4 mol%, from about 0.3 mol% to about 1.35 mol%, from about 0.4 mol% to about 1.3 mol%, from about 0.4 mol% to about 1.25 mol%, or from about 0.45 mol% to about 1.25 mol%. When the amount of aluminum satisfies the above range, the problem of particle damage during the compression process is effectively suppressed, the problem of accelerated particle deterioration during charging and discharging is prevented, and a kinetic balance of lithium ions and electrons is formed, which has the advantage of improving cycle-life characteristics of a rechargeable lithium battery.

In the first positive electrode active material, an amount of boron based on 100 mol% of a total metal excluding lithium is from about 1.05 mol% to about 2 mol% and may be, for example, from about 1.1 mol% to about 1.9 mol%, from about 1.2 mol% to about 1.8 mol%, or from about 1.2 mol% to about 1.75 mol%. When the amount of boron satisfies the above range, the problem of particle damage during the compression process is effectively suppressed, the problem of accelerated particle deterioration during charge and discharge is prevented, and a kinetic balance of lithium ions and electrons is formed, which has the advantage of improving cycle-life characteristics of a rechargeable lithium battery.

The amounts of aluminum and boron in the coating layer need to be adjusted to an appropriate range. The amounts of aluminum and boron in the coating layer may be measured by scanning electron microscopy-energy dispersive spectroscopy (SEM-EDS).

The first positive electrode active material may have an amount of aluminum from about 0.1 at% to about 10 at%, for example, from about 0.1 at% to about 5.0 at%, from about 0.1 at% to about 2.0 at%, from about 0.1 at% to about 1.5 at%, or from about 0.5 at% to about 1.2 at% based on a total metal excluding lithium on the surface of the secondary particle as measured by scanning electron microscope-energy dispersive spectroscopy (SEM-EDS). The amount of aluminum on the surface of the secondary particle may only mean the amount of aluminum included in the coating layer. By ensuring that the amount of aluminum included in the coating layer on the surface of the secondary particle satisfies the above range, the chemical stability of the surface of the first lithium nickel-based composite oxide is improved, and structural collapse of the first positive electrode active material may be suppressed.

The first positive electrode active material may have an amount of boron from about 0.1 at% to about 10 at%, for example, from about 0.5 at% to about 5.0 at%, from about 0.5 at% to about 2.0 at%, from about 0.5 at% to about 1.5 at%, or from about 1 at% to about 1.5 at% based on a total metal excluding lithium on the surface of the secondary particle as measured by scanning electron microscope-energy dispersive spectroscopy (SEM-EDS). The amount of boron on the surface of the secondary particle may only mean the amount of boron included in the coating layer. By ensuring that the amount of boron included in the coating layer on the surface of the secondary particle satisfies the above range, a generation of corrosive byproducts resulting from the reaction between the first positive electrode active material and the electrolyte may be suppressed, and the elution of transition metals from the surface of the first positive electrode active material may be suppressed, thereby suppressing structural collapse of the first positive electrode active material.

A ratio (Al/B) of the amount of aluminum to the amount of boron based on the total metal excluding lithium on the surface of the secondary particle, as measured by scanning electron microscope-energy dispersive spectroscopy (SEM-EDS), of the first positive electrode active material may be from about 0.1 to about 5, for example, from about 0.15 to about 4.5, from about 0.2 to about 4, or from about 0.25 to about 3.5. When the above ratio is satisfied, the resistance on the surface of the secondary particle is lowered, thereby improving the capacity and improving the cycle-life characteristics according to repeated charge and discharge cycles.

The coating layer may be in the form of an island or a continuous film. The coating layer may be in the form of a film that continuously surrounds the surface of the secondary particle, or, for example, may be in the form of a shell that surrounds the entire surface of the secondary particle. This is distinct from a structure in which only portion of the surface of the secondary particle is partially coated. The coating layer may be formed such that the coating layer completely covers the surface of the secondary particles, while being formed with a very thin and uniform thickness, and accordingly, the first positive electrode active material has improved structural stability without increasing resistance or decreasing capacity, can effectively suppress side reactions with the electrolyte, can reduce gas generation under high-voltage and high-temperature conditions, and can implement long cycle-life characteristics.

Within the above coating layer, aluminum and boron may be mixed with each other, and boron may be distributed in part or the entire area where aluminum is distributed.

The coating layer may include an aluminum-containing material and a boron-containing compound.

The aluminum-containing material may include aluminum metal, aluminum oxide, aluminum hydroxide, aluminum oxyhydroxide, lithium aluminum oxide, or a combination thereof and may include, for example, Al, Al₂O₃, Al(OH)₃, AlOOH, LiAlO₂, or a combination thereof.

The boron-containing compound may include boron oxide, boric acid, lithium borate, or a combination thereof and may include, for example, B₂O₂, B₂O₃, B₄O₃, B₄O₅, B(OH)₃, LiBO₂, Li₃B₇O₁₂, Li₆B₄O₉, Li₃B₁₁O₁₈, Li₂B₄O₇, Li₃BO₃, or a combination thereof.

A thickness of the coating layer may vary depending on the firing temperature and may be, for example, from about 5 nm to about 500 nm, for example, from about 5 nm to about 100 nm, from about 5 nm to about 200 nm, from about 10 nm to about 300 nm, from about 50 nm to about 500 nm, or from about 100 nm to about 500 nm. When the coating layer satisfies a thickness range described above, the structural stability of the first positive electrode active material may be improved and side reactions with the electrolyte may be effectively suppressed without increasing resistance or decreasing capacity due to the coating. The thickness of the coating layer may be measured, for example, by scanning electron microscopy (SEM), transmission electron microscopy (TEM), secondary ion mass spectrometry (TOF-SIMS), X-ray photoelectron spectroscopy (XPS), or energy dispersive spectroscopy (EDS), and for example, by EDS line profile analysis of a cross-section of the positive electrode active material.

During the formation process of the coating layer, aluminum and boron may diffuse into the first lithium nickel-based composite oxide. Unlike the doping described above, the first positive electrode active material may further include a grain boundary coating portion disposed on the surface of the primary particles in the internal portion of the secondary particles and containing aluminum and boron. The secondary particle means the first lithium nickel-based composite oxide, and the internal portion of the secondary particle may mean the entire internal portion excluding the surface of the secondary particle or may mean an area from the center of the secondary particle to about 60 length% of the radius in the direction of the surface of the secondary particle. The grain boundary coating portion has a concept distinct from the coating layer located on the surface of the first lithium nickel-based composite oxide or the doping that changes the composition by replacing some elements of the first lithium nickel-based composite oxide, and refers to a coating portion formed on the surface of primary particles in the internal portion of the first lithium nickel-based composite oxide. The presence of the grain boundary coating portion may be confirmed by SEM-EDS analysis of the cross-section of the first positive electrode active material. The first positive electrode active material may further include a grain boundary coating portion containing aluminum and boron, thereby further stabilizing the structure and improving cycle-life characteristics.

The amounts of aluminum and boron in the grain boundary coating portion are not particularly limited. For example, the amount of aluminum in the grain boundary coating portion may be less than the amount of aluminum in the coating layer, and the amount of boron in the grain boundary coating portion may be less than the amount of boron in the coating layer.

The first positive electrode active material may be in a form of secondary particles in which a plurality of primary particles are agglomerated. At least some of the primary particles may have a radial arrangement structure. The primary particles may be formed with a thickness smaller than the long axis length. The long axis length means a maximum length based on the widest surface of the primary particle. The primary particle may have a structure in which the length (t) in one axial direction (i.e., thickness direction) is formed smaller than the long axis length (a) in the other direction (plane direction).

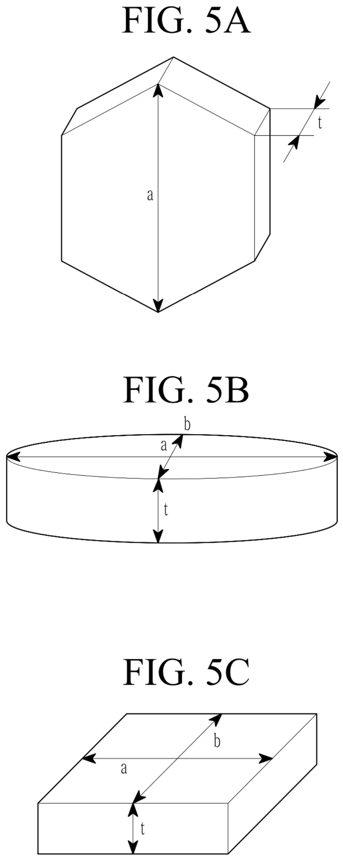

FIGS. 5A to 5C are a schematic view showing plate-shaped primary particles of a first positive electrode active material according to some embodiments of the present disclosure. The primary particles according to some embodiments have various detailed shapes while having a basic plate structure. For example, Fig. 5A illustrates a polygonal nanoplate shape such as a hexagon, Fig. 5B illustrates a nanodisk shape, and Fig. 5C illustrates a rectangular parallelepiped shape. In FIGS. 5A to C, "a" means the length of the long axis of the primary particle, "b" means the length of the short axis of the primary particle, and "t" means the thickness of the primary particle. The thickness t of the primary particles may be smaller than the lengths a and b in the plane direction. Among the lengths in the plane direction, a may be greater than or equal to b. A direction in which the thickness t is defined in the primary particles is defined as a thickness direction, and a direction having lengths a and b is defined as a plane direction.

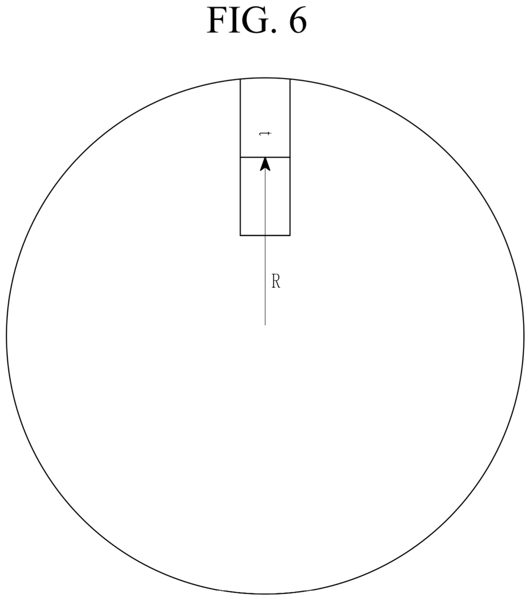

FIG. 6 is a schematic view showing a radial structure of a secondary particle according to some embodiments of the present disclosure.

In the first positive electrode active material, at least a portion of the primary particles may have a radial arrangement structure; for example, long axes of the primary particles may be arranged in a radial direction. In some embodiments, the radial arrangement structure means that, as shown in FIG. 6, the thickness (t) direction of the primary particles is perpendicular to or within an angle of ± 5° of perpendicular to the direction (R) from the secondary particles toward a center.

An average length of the primary particles of the secondary particle may be from about 0.01 µm to about 5 µm, for example from about 0.01 µm to about 2 µm, from about 0.01 µm to about 1 µm, from about 0.02 µm to about 1 µm, from about 0.05 µm to about 0.5 µm, or from about 150 nm to about 500 nm. Here, "average length" refers to the length of long axis when the primary particle is non-spherical, and to the average particle diameter when the primary particle is spherical. As an example of a non-spherical particle, the primary particles may be plate-shaped. In the case of plate-shaped particles, the average length corresponds to the length of the long axis (a) in the plane direction, as shown in FIGS. 5A to 5C.

When the primary particles are plate-shaped, an average thickness of the primary particles may be, for example, greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, or greater than or equal to about 900 nm, and, for example, less than or equal to about 5 µm, less than or equal to about 4 µm, less than or equal to about 3 µm, less than or equal to about 2 µm, less than or equal to about 1 µm, less than or equal to about 900 nm, less than or equal to about 800 nm, less than or equal to about 700 nm, less than or equal to about 600 nm, or less than or equal to about 500 nm, for example, from about 100 nm to about 200 nm. In addition, in the primary particle, a ratio of the average thickness to the average length may be about 1:1 to about 1:10, for example, about 1:1 to about 1:8, about 1:1 to about 1:6, or about 1:2 to about 1:5.

As described above, when the average length, the average thickness, and the ratio between the average thickness and the average length of the primary particles satisfy the above ranges and the primary particles are radially arranged, it is possible to have relatively many lithium diffusion pathways between grain boundaries on the surface side, and a large number of crystal planes capable of lithium transfer are exposed to the outside, so that lithium diffusion is improved and high initial efficiency and capacity can be secured. In addition, when the primary particles are arranged radially, pores exposed on the surface of the secondary particles are directed toward the center of the secondary particles, thereby promoting diffusion of lithium. Due to the radially arranged primary particles, uniform contraction and expansion are possible when lithium is deintercalated and/or intercalated, and when lithium is deintercalated, pores exist in the (001) direction, which is the direction in which the particles expand, so that the pores act as a buffer. In addition, due to the size and arrangement of the primary particles, the probability of cracks occurring during contraction and expansion of the positive electrode active material may be lowered, and the internal pores further alleviate the volume change to reduce the cracks generated between the primary particles during charging and discharging, resulting in improved cycle-life characteristics and reduced resistance increase phenomenon of a battery.

The positive electrode active material may have an irregular porous structure in at least one of the internal portion and the external portion of the secondary particle. The term "irregular porous structure" may refer to a structure in which the pore sizes and shapes are not regular and do not have uniformity. The secondary particle may include an internal portion including an irregular porous structure and an external portion having a radially arranged structure. The primary particles in the internal portion may be arranged without regularity, unlike the primary particles in the external portion. The internal portion containing the irregular porous structure includes primary particles like the external portion.

The term "external portion" may refer to a region from about 30 length% to about 50 length% from the outermost surface, for example about 40 length% from the outermost surface with respect to a total distance from the center to the surface of the secondary particle or, in some embodiments, may refer to a region within about 2 µm from the outermost surface of the secondary particle. The term "internal portion" may refer to a region from about 50 length% to about 70 length% from the center, for example, within about 60 length% from the center with respect to a total distance from the center to the surface of the secondary particle or, in some embodiments, a region excluding the region within about 2 µm from the outermost surface of the secondary particle.

The secondary particles of the first positive electrode active material including the first lithium nickel-based composite oxide may have an external portion oriented in a radial structure and an internal portion including an irregular porous structure, and the internal portion of the secondary particles may have a larger pore size than the external portion. In the first positive electrode active material, the internal portion may have a pore size from about 150 nm to about 1 µm and an external portion may have a pore size of less than about 150 nm. Thus, when the pore size of the internal portion is larger than that of the external portion, there may be an advantage of shortening a diffusion distance of lithium in the first positive electrode active material, compared to secondary particle having the same pore sizes of the internal and external portions, and lithium may be easily inserted from the outside, and, in addition, there may be an effect of alleviating volume changes during the charge and discharge. Herein, the pore size means an average diameter when a pore is spherical or circular and a length of a long axis when the pore is oval.

The secondary particles of the first positive electrode active material including the first lithium nickel-based composite oxide may have open pores with a size of less than about 150 nm, for example, from about 10 nm to about 148 nm, from the surface toward the center of the internal portion. The open pore is an exposed pore through which a material can enter and exit. The open pores may be formed to a depth of less than or equal to about 150 nm, for example, from about 0.001 nm to about 100 nm or, for example, from about 1 nm to about 50 nm on average from the surface of the secondary particle.

Closed pores may exist in the internal portion of the secondary particle, and closed pores and/or open pores may exist in the external portion. The closed pores may exclude or mostly exclude an electrolyte, while the open pores may include an electrolyte in the open pores. The closed pores are independent pores that are not connected to other pores because all of the walls of the pores are formed in a closed structure, and the open pores are continuous pores connected to outside of the particle because at least some of the walls of the pores are formed in an open structure.

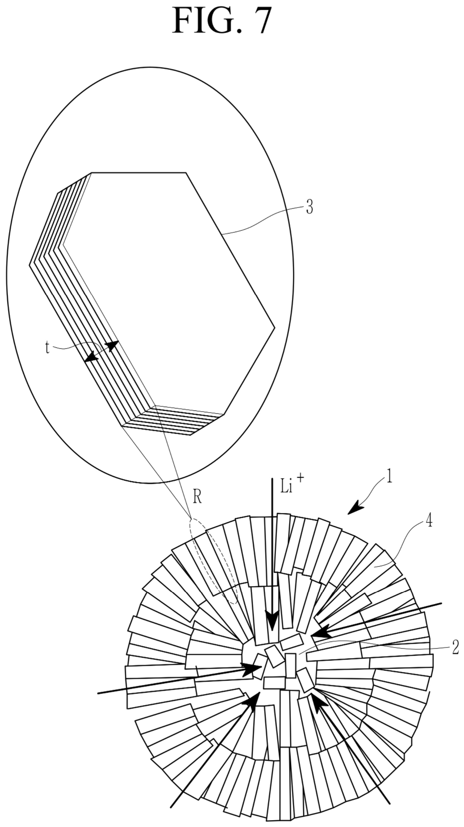

FIG. 7 is a schematic view showing a cross-sectional structure of a secondary particle of the positive electrode active material according to some embodiments of the present disclosure. Referring to FIG. 7, the secondary particles 1 of the positive electrode active material according to some embodiments have an external portion 4 having a structure in which the primary particles having a plate shape are arranged in a radial direction, and an internal portion 2 in which the primary particles 3 are irregularly arranged. The internal portion 2 may have more empty spaces between the primary particles than the external portion. In addition, the pore size and porosity in the internal portion are large and irregular compared to the pore size and porosity in the external portion. In FIG. 7, arrows indicate the movement direction of lithium ions.

In the secondary particles, the internal portion has a porous structure, which has the effect of reducing the diffusion distance of lithium ions to the internal portion, and the external portion is arranged radially toward the surface, which makes it easy for lithium ions to be inserted into the surface. In addition, because the size of the primary particles is small, it is easy to secure a lithium transfer path between crystal grains. In addition, since the size of the primary particles is small and the pores between the primary particles alleviate the volume change occurring during charging and discharging, the stress caused by the volume change during charging and discharging may be minimized. Such a positive electrode active material may reduce resistance of a battery and may improve capacity characteristics and cycle-life characteristics.

Meanwhile, in the secondary particles, the plurality of primary particles may have a radial arrangement structure by being arranged toward the one center to make surface contact along the thickness direction of the primary particles. Alternatively, the secondary particles may have a multi-center radial arrangement structure having a plurality of centers. As such, when the secondary particles have a single-center or multi-center radial arrangement structure, lithium is easily deintercalated and/or intercalated to the center of the secondary particles.

The secondary particles may include radial primary particles and non-radial primary particles. An amount of the non-radial primary particles may be less than or equal to about 20 wt%, for example from about 0.01 wt% to about 10 wt%, or, specifically from about 0.1 wt% to about 5 wt%, based on the total weight of the radial primary particles and the non-radial primary particles. When the amount of non-radial primary particles other than radial primary particles in the secondary particles satisfies the above range, a battery with improved cycle-life characteristics may be manufactured because lithium diffusion is easy.

Meanwhile, according to some embodiments, the length of the primary particles may increase due to the doping, thereby increasing the aspect ratio of the primary particles. In addition, the (003) plane of the primary particles may increase and the (014) plane and (104) plane may decrease by the above doping, and the (003) plane of the primary particles may be arranged parallel to the direction from the center of the secondary particles toward the surface. The a-axis of the primary particles with a high aspect ratio coincides with the radial direction from the center of the secondary particles to the surface. Accordingly, an orientation of the primary particles may be increased so that they are arranged in a radial form from the center of the secondary particles to the surface. As the orientation of the primary particles increases due to the above doping, efficiency of lithium ion intercalation and de-intercalation may be increased, and, even if the primary particles shrink and expand in the c-axis direction during the charge and discharge process of the rechargeable lithium battery, the stress on the secondary particles may be relieved, thereby minimizing a crack occurrence rate of the secondary particles.

An average particle diameter D₅₀ of the secondary particles of the first positive electrode active material may be from about 10 µm to about 25 µm. The first positive electrode active material may be expressed as large particles. An average particle diameter D₅₀ of the secondary particles of the first positive electrode active material may be, for example, about 10 µm to about 20 µm, about 10 µm to about 18 µm, about 10 µm to about 15 µm, about 11 µm to about 14 µm, or about 11.5 µm to about 13.5 µm. The average particle diameter D₅₀ may be obtained by obtaining a particle size distribution for the first positive electrode active material using a particle size analyzer (PSA), and taking the diameter of particles having a cumulative volume of 50 vol% from the particle size distribution as the average particle diameter.

### Second Positive Electrode Active Material

The composite positive electrode active material uses a bimodal type composite positive electrode active material in which a second positive electrode active material having an average particle diameter D₅₀ smaller than the average particle diameter D₅₀ of the first positive electrode active material is mixed with the aforementioned first positive electrode active material, so that the second positive electrode active material may fill the gaps between the first positive electrode active materials, thereby improving integration density of the positive electrode active material within a unit volume, and improving energy density per unit volume for the positive electrode active material.

The second positive electrode active material includes a second lithium nickel-based composite oxide.

The second lithium nickel-based composite oxide may be represented by Chemical Formula 4.

[Chemical Formula 4] Liₐ₄Niₓ₄M⁶_{y4}M⁷_{z4}O_{2-b4}X_{b4}.

In Chemical Formula 4, 0.9≤a4≤1.8, 0.3≤x4≤1, 0≤y4≤0.7, 0≤z4≤0.7, 0.9≤x4+y4+z4≤1.1, and 0≤b4≤0.1. M⁶ and M⁷ are different from each other and are independently Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof.

In Chemical Formula 4, 0.6≤x4≤1, 0≤y4≤0.4, and 0≤z4≤0.4; 0.8≤x4≤1, 0≤y4≤0.2, and 0≤z4≤0.2; or 0.9≤x4<1, 0<y4≤0.1, and 0≤z4≤0.1.

The second lithium nickel-based composite oxide may be represented by Chemical Formula 5 or Chemical Formula 6 as an example.

[Chemical Formula 5] Liₐ₅Niₓ₅Co_{y5}M⁸_{z5}O_{2-b5}X_{b5}.

In Chemical Formula 5, 0.9≤a5≤1.2, 0.8≤x5<1, 0<y5≤0.2, 0≤z5≤0.2, 0.9≤x5+y5+z5≤1.1, and 0≤b5≤0.1. M⁸ is Al, B, Ba, Ca, Ce, Cr, Cu, Fe, Mg, Mn, Mo, Nb, Si, Sn, Sr, Ta, Ti, V, W, Y, Zn, Zr, or a combination thereof, and X is F, P, S or a combination thereof.

In Chemical Formula 5, 0.9≤x5≤0.99, 0.01≤y5≤0.1, and 0≤z5≤0.1.

[Chemical Formula 6] Liₐ₆Niₓ₆Co_{y6}M⁹_{z6}M¹⁰_{w6}O_{2-b6}X_{b6}.

In Chemical Formula 6, 0.9≤a6≤1.2, 0.8≤x6≤0.98, 0.01≤y6≤0.19, 0.01≤z6≤0.19, 0≤w6≤0.19, 0.9≤x6+y6+z6+w6≤1.1, and 0≤b6≤0.1. M⁹ is Al, Mn, or a combination thereof, M¹⁰ is B, Ba, Ca, Ce, Cr, Cu, Fe, Mg, Mo, Nb, Si, Sn, Sr, Ta, Ti, V, W, Y, Zn, Zr, or a combination thereof, and X is F, P, S, or a combination thereof.

In Chemical Formula 6, 0.9≤x6≤0.98, 0.01≤y6≤0.09, 0.01≤z6≤0.09, and 0≤w6≤0.09.

In the second lithium transition metal composite oxide, the amount of nickel based on 100 mol% of a total metal excluding lithium may be greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol% and may be less than or equal to about 99 mol%, for example, less than or equal to about 98 mol%, in the high nickel-based positive electrode active material. Both the first positive electrode active material and the second positive electrode active material may realize high capacity by including a high nickel-based positive electrode active material having the amount of nickel within the above range, and thus may be applied to a high-capacity, high-density rechargeable lithium battery.

The second positive electrode active material may be in a form of particles, may be in a form of secondary particles formed by agglomerating a plurality of primary particles or may be in a form of single particles. For example, the second positive electrode active material may be in a form of single particles. The single particles exist alone without a grain boundary within the particle, is composed of one particle and may be a monolith structure, a one body structure, or a non-agglomerated particle, in which particles are not agglomerated with each other but exist as an independent phase in terms of morphology and may be expressed as, for example, a single crystal. The composite positive electrode active material according to the embodiment may exhibit improved cycle-life characteristics while implementing high capacity and high energy density by including the second positive electrode active material.

The second positive electrode active material has no particular limit to a shape but may have various shapes such as a polyhedron, an ellipsoid, a plate, a rod, an irregular shape, and the like.

An average particle diameter D₅₀ of the second positive electrode active material is smaller than an average particle diameter D₅₀ of the first positive electrode active material. The average particle diameter D₅₀ of the single particles of the second positive electrode active material may be less than about 10 µm. The second positive electrode active material may be expressed as small particles. For example, the average particle diameter may be from about 0.1 µm to about 9 µm, from about 0.5 µm to about 7 µm, from about 1 µm to about 6 µm, or from about 2 µm to about 5 µm. The average particle diameter D₅₀ may be obtained by randomly measuring sizes (diameter or long axis length) of about 20 particles from a scanning electron microscope image of the second positive electrode active materials in the form of single particles in the composite positive electrode active material to obtain a particle size distribution, and taking diameters of the particles having a cumulative volume of 50 vol% from the particle size distribution as the average particle diameter.

Based on 100 wt% of the composite positive electrode active material, the first positive electrode active material may be included in an amount from about 50 wt% to about 95 wt%, from about 55 wt% to about 90 wt%, from about 60 wt% to about 80 wt%, or from about 65 wt% to about 75 wt%, and the second positive electrode active material may be included in an amount from about 5 wt% to about 50 wt%, from about 10 wt% to about 45 wt%, from about 20 wt% to about 40 wt%, or from about 25 wt% to about 35 wt%.

### Method of Preparing Composite Positive Electrode Active Material

Some embodiments provide a method of preparing a composite positive electrode active material, which includes mixing a tungsten-doped nickel-based precursor, a lithium raw material, an aluminum raw material, and a boron raw material to obtain a mixture and first firing the mixture at a temperature of greater than about 720°C to prepare a first positive electrode active material including a first lithium nickel-based composite oxide including tungsten, aluminum, and boron, and mixing the first positive electrode active material and a second positive electrode active material including a second lithium nickel-based composite oxide having an average particle diameter D₅₀ smaller than an average particle diameter D₅₀ of the first positive electrode active material. In the preparing of the first positive electrode active material, aluminum of the aluminum raw material is introduced in an amount of about 0.1 parts by mole to about 1.45 parts by mole based on 100 parts by mole of a total metal in the tungsten-doped nickel-based precursor, boron of the boron raw material is introduced in an amount of about 1.05 parts by mole to about 2 parts by mole based on 100 parts by mole of a total metal in the tungsten-doped nickel-based precursor.

When using a tungsten-doped nickel-based precursor, a boron coating layer is formed even when both aluminum and boron raw materials are added, but, in some cases, an aluminum coating layer is not formed. This is a unique phenomenon that occurs when using the tungsten-doped nickel-based precursor. In some embodiments, the first positive electrode active material including the first lithium nickel-based composite oxide including tungsten, aluminum, and boron may be prepared by controlling the amount of aluminum in the aluminum raw material, the amount of boron in the boron raw material, and the first firing temperature when preparing the first positive electrode active material within the aforementioned ranges.

Hereinafter, the method of preparing a composite positive electrode active material is described in detail.

### Preparing of First Positive Electrode Active Material

In this step, a tungsten-doped nickel-based precursor, a lithium raw material, an aluminum raw material, and a boron raw material are mixed and first fired at a temperature of greater than about 720°C to prepare the first positive electrode active material including the first lithium nickel-based composite oxide including tungsten, aluminum, and boron. In the above step, a tungsten-doped nickel-based precursor and a lithium raw material, an aluminum raw material, and a boron raw material are mixed and fired to prepare a lithium nickel-based composite oxide doped with tungsten, aluminum, and boron, and at the same time, a coating layer containing aluminum and boron is formed on the surface of the lithium nickel-based composite oxide, thereby preparing the aforementioned first positive electrode active material. Because the details of the first positive electrode active material prepared above are as described above, those details are omitted below and the preparing method is described in detail.

The tungsten-doped nickel-based precursor may be prepared by directly doping tungsten into a nickel-based precursor or may be obtained by using a commercially available tungsten-doped nickel-based precursor. In some embodiments, when preparing by directly doping tungsten into a nickel-based precursor, the tungsten-doped nickel-based precursor may be prepared in a batch type reactor by putting a set amount of material into one reactor and completing the reaction over a set period of time and then discharging it or the tungsten-doped nickel-based precursor may be prepared in a CSTR (Continuous Stirred-Tank Reactor) type reactor that enables continuous production by continuously inputting and discharging materials and, thus, maintaining a constant mixing and reaction state within the reactor.

The tungsten-doped nickel-based precursor may be used in the form of an oxide or a hydroxide. In some embodiments, the tungsten-doped nickel-based precursor may be in the form of a tungsten-doped nickel-based oxide, a tungsten-doped nickel-based hydroxide, or a combination thereof.

The tungsten-doped nickel-based precursor may be used in the form of an oxide, i.e., a tungsten-doped nickel-based oxide may be used. The tungsten-doped nickel-based oxide may be expressed as a first nickel-based composite oxide.

The first nickel-based composite oxide may be represented by Chemical Formula 7.

[Chemical Formula 7] Niₓ₇M¹¹_{y7}M¹²_{z7}W_{w7}O₂.

In Chemical Formula 7, 0.3≤x7≤1, 0≤y7≤0.7, 0≤z7≤0.7, and 0.0001≤w7≤0.001, 0.9≤x7+y7+z7+w7≤1.1. And M¹¹ and M¹² are different from each other and are each independently Al, B, Ba, Ca, Ce, Co, Cr, Cu, Fe, Mg, Mn, Mo, Nb, Si, Sn, Sr, Ta, Ti, V, Y, Zn, Zr, or a combination thereof.

In Chemical Formula 7, 0.6≤x7≤1, 0≤y7≤0.4, 0≤z7≤0.4, and 0.0001≤w7≤0.001; 0.8≤x7≤1, 0≤y7≤0.2, 0≤z7≤0.2, and 0.0001≤w7≤0.001; or 0.9≤x7≤0.99, 0.01≤y7≤0.1, 0.01≤z7≤0.1, and 0.0001≤w7≤0.001.

The first nickel-based composite oxide may be represented by the Chemical Formula 8 as an example.

[Chemical Formula 8] Niₓ₈Co_{y8}M¹³_{z8}W_{w8}O₂.

In Chemical Formula 8, 0.8≤x8≤0.1, 0≤y8≤0.2, 0≤z8≤0.2, 0.0001≤w8≤0.001, and 0.9≤x8+y8+z8+w8≤1.1. M¹³ is Al, B, Ba, Ca, Ce, Cr, Cu, Fe, Mg, Mn, Mo, Nb, Si, Sn, Sr, Ta, Ti, V, Y, Zn, Zr, or a combination thereof.

In Chemical Formula 8, 0.9≤x8≤0.99, 0.01≤y8≤0.1, 0.01≤z8≤0.1, and 0.0001≤w8≤0.001.

The tungsten-doped nickel-based precursor may be in the form of particles and may have an average particle diameter D₅₀ from about 10 µm to about 25 µm. The tungsten-doped nickel-based precursor may be expressed as a large-particle precursor. An average particle diameter D₅₀ of the tungsten-doped nickel-based precursor may be, for example, from about 10 µm to about 20 µm, from about 10 µm to about 18 µm, or from about 10 µm to about 15 µm. The average particle diameter D₅₀ may be obtained by obtaining a particle size distribution for the tungsten-doped nickel-based precursor using a particle size analyzer (PSA), and taking the diameter of particles having a cumulative volume of 50 vol% from the particle size distribution as the average particle diameter.

The tungsten-doped nickel-based precursor may be a high-nickel-based precursor as described above, and for example, the amount of nickel may be greater than or equal to about 80 mol% based on 100 mol% of the total metal in the tungsten-doped nickel-based precursor. The amount of the nickel is the same as that described above in the first nickel-based composite oxide doped with tungsten, and is therefore omitted below. In addition, the tungsten-doped nickel-based precursor is a nickel-based composite oxide or nickel-based composite hydroxide doped with tungsten, and the doping amount of the tungsten may be from about 0.01 mol% to about 0.1 mol%, for example, from about 0.02 mol% to about 0.1 mol%, from about 0.03 mol% to about 0.1 mol%, or from about 0.04 mol% to about 0.1 mol% based on 100 mol% of the total metal in the tungsten-doped nickel-based precursor.

Any known lithium raw material may be used, and for example, Li₂CO₃, LiOH, a hydrate thereof, or a combination thereof may be used. Among the lithium raw material, lithium may be mixed in the first nickel-based composite oxide in an amount from about 90 parts by mole to about 120 parts by mole based on 100 parts by mole of the total metal.

The aluminum raw material may include, for example, aluminum nitrate, aluminum sulfate, aluminum carbonate, aluminum hydroxide, or a combination thereof.

The aluminum of the aluminum raw material may be introduced in an amount from about 0.1 parts by mole to about 1.45 parts by mole, for example from about 0.2 parts by mole to about 1.3 parts by mole, from about 0.3 parts by mole to about 1.2 parts by mole, from about 0.4 parts by mole to about 1.1 parts by mole, or from about 0.5 parts by mole to about 1 part by mole based on 100 parts by mole of a total metal in the tungsten-doped nickel-based precursor. When the amount of aluminum in the aluminum raw material satisfies the above range, a coating layer containing both aluminum and boron may be formed on the surface of the first positive electrode active material (e.g., secondary particle). If the amount of aluminum in the aluminum raw material exceeds the above range, an aluminum coating may not be formed regardless of the amount of boron raw material.

The boron raw material may include, for example, H₃BO₃, HBO₂, B₂O₃, C₆H₅B(OH)₂, (C₆H₅O)₃B, [CH₃(CH₂)₃O]₃B, (C₃H₇O)₃B, C₃H₉B₃O₆, C₁₃H₁₉BO₃, or a combination thereof.

The boron of the boron raw material may be introduced in an amount of about 1.05 parts by mole to about 2 parts by mole, for example, from about 1.1 parts by mole to about 1.95 parts by mole, from about 1.15 parts by mole to about 1.9 parts by mole, from about 1.2 parts by mole to about 1.8 parts by mole, or from about 1.25 parts by mole to about 1.75 parts by mole based on 100 parts by mole of a total metal in the tungsten-doped nickel-based precursor. When the amount of boron of the boron raw material satisfies the above ranges, a coating layer containing both aluminum and boron may be formed on the surface of the first positive electrode active material (e.g., secondary particle). Assuming that the aluminum input amount of the aluminum raw material satisfies the above ranges, if the boron input amount of the boron raw material is less than the above ranges, the aluminum coating may not be formed.

The mixing may be carried out in a dry or wet manner. Dry mixing may be carried out by mixing a tungsten-doped nickel-based precursor, a lithium raw material, an aluminum raw material, and a boron raw material to obtain a mixture without a solvent, and the wet mixing may be carried out by adding a tungsten-doped nickel-based precursor, a lithium raw material, an aluminum raw material, and a boron raw material to a solvent such as distilled water to mix them.

The first firing may be carried out in an oxidizing gas atmosphere, for example, in an oxygen atmosphere or an air atmosphere. Additionally, the first firing temperature may be from about 730°C to about 1000°C, from about 730°C to about 900°C, from about 730°C to about 800°C, or from about 730°C to about 770°C. The first firing time may vary depending on the first firing temperature but may be, for example, from about 10 hours to about 25 hours. According to the first firing, aluminum and boron may be doped in the internal portion of the first lithium nickel-based composite oxide, and at the same time, aluminum and boron may be coated on the surface of the first lithium nickel-based composite oxide. When the first firing temperature satisfies the above range, a coating layer containing both aluminum and boron may be formed.

After the first firing, the method may further include washing the fired product and performing an additional firing. The additional firing may be referred to as a second firing. The washing may involve mixing the fired material in distilled water and drying, which may also remove any residual lithium.

The second firing can be performed at a lower temperature than the first firing. The second firing may be performed in an oxidizing gas atmosphere like the first firing, and the second firing may be performed at a temperature of about 500°C to about 730°C, about 600°C to about 730°C, or about 650°C to about 730°C for about 10 to about 20 hours. According to the second firing, the fired product may have a more stable structure.

### Mixing of First Positive Electrode Active Material and Second Positive Electrode Active Material

Next, the first positive electrode active material and the second positive electrode active material including the second lithium nickel-based composite oxide are mixed.

The first positive electrode active material is obtained according to the above-described manufacturing method. The second positive electrode active material may be prepared according to a known method if it includes a second lithium nickel-based composite oxide or may be a commercially available product. Because the amounts of the second positive electrode active material are the same as described above, the descriptions therefor are omitted below.

A mixing weight ratio of the first positive electrode active material and the second positive electrode active material may be about 50:50 to about 95:5, for example, from about 55:45 to about 90:10, from about 60:40 to about 80:20, or from about 65:35 to about 75:25. When the mixing weight ratio of the first positive electrode active material and the second positive electrode active material satisfies the above ranges, the energy density may be maximized while improving the capacity characteristics, cycle-life characteristics, and rate capability.

### Rechargeable Lithium Battery

Some embodiments provide a rechargeable lithium battery including a positive electrode, a negative electrode, and an electrolyte, wherein the positive electrode includes a positive electrode current collector, and a positive electrode active material layer disposed on the positive electrode current collector and including the composite positive electrode active material described above. The rechargeable lithium battery may include a positive electrode, a negative electrode, a separator positioned between the positive electrode and the negative electrode, and an electrolyte.

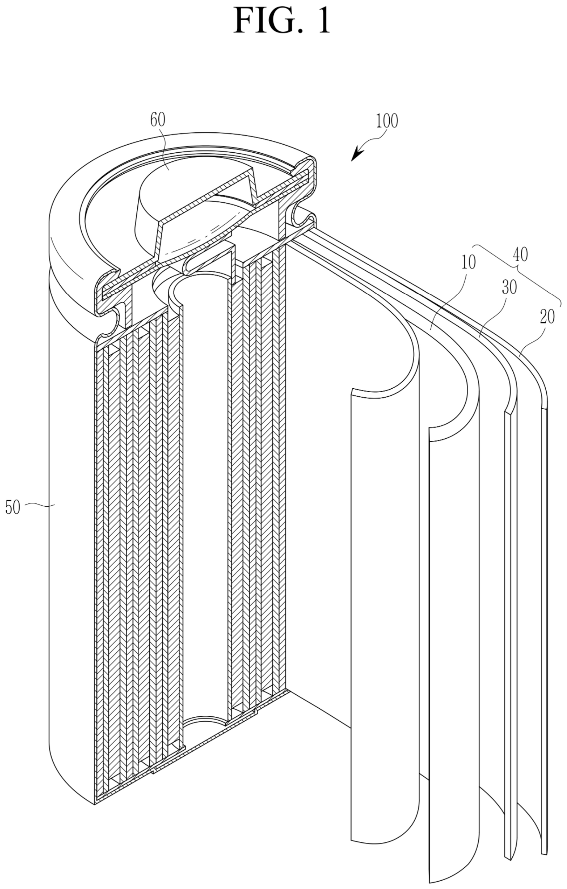

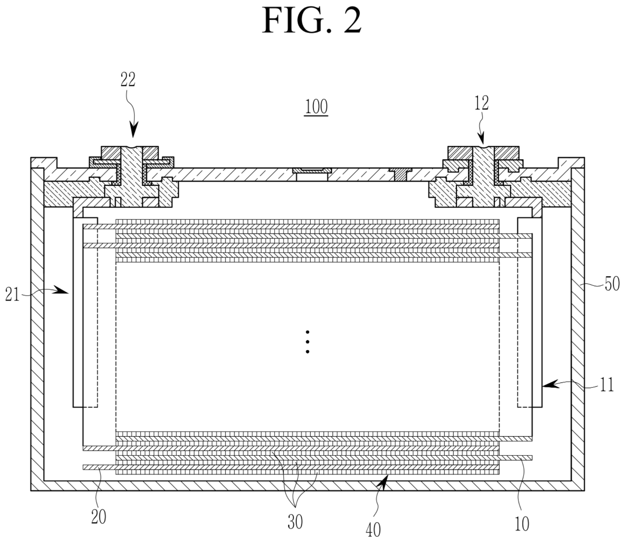

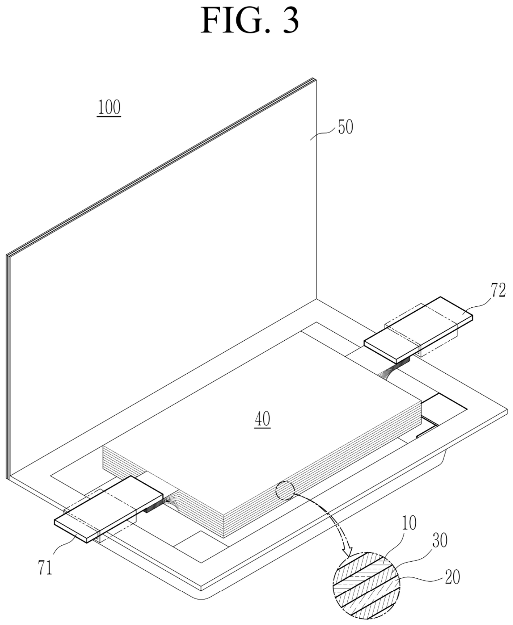

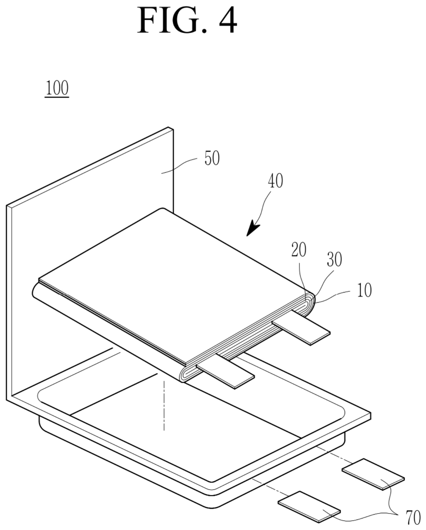

FIGS. 1 to 4 are schematic views showing rechargeable lithium batteries according to some embodiments of the present disclosure. The rechargeable lithium battery may be cylindrical, prismatic, pouch-shaped, coin-shaped, etc. Particularly, FIG. 1 shows a cylindrical battery, FIG. 2 shows a prismatic battery, and FIGS. 3 and 4 each show a pouch-shaped battery.

The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70. More particularly, the rechargeable lithium battery 100 may include a positive electrode tab 71 and a negative electrode tab 72 serving as an electrical path for inducing the current formed in the electrode assembly 40 to the outside.

The rechargeable lithium battery according to some embodiments may secure excellent cycle-life characteristics and rate capability by including the above-described positive electrode, while significantly improving the electrical resistance of the electrode.

### Positive Electrode

The positive electrode includes a positive electrode current collector and includes a positive electrode active material layer disposed on the positive electrode current collector, the positive electrode active material including the composite positive electrode active material described above.

### (Positive Electrode Current Collector)

The positive electrode current collector is not particularly limited as long as it has conductivity and does not cause a chemical change in the rechargeable lithium battery, and the positive electrode current collector may be an aluminum foil or a stainless steel foil having a thickness from about 10 µm to about 15 µm.

### (Positive Electrode Active Material Layer)

The positive electrode active material layer includes a composite positive electrode active material and may optionally further include a binder, a conductive material, or a combination thereof.

Details regarding the composite positive electrode active material are as described above, and thus they are omitted below.

The binder improves binding properties of the positive electrode active material particles with one another and with a current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but the binder is not limited thereto.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, an amount of the composite positive electrode active material may be from about 60 wt% to about 99.9 wt%, from about 70 wt% to about 99.8 wt%, from about 80 wt% to about 99 wt%, or from about 90 wt% to about 98 wt% based on 100 wt% of the positive electrode active material layer.

In the positive electrode active material layer, an amount of the binder may be from about 0.1 wt% to about 5 wt% based on 100 wt% of the positive electrode active material layer, and an amount of the conductive material may be from about 0.1 wt% to about 5 wt% based on 100 wt% of the positive electrode active material layer.

In addition to the aforementioned configuration, the above-described positive electrode active material layer may further include other positive electrode active materials, irreversible positive electrode additives, etc., within a range that does not impede the purpose of the present invention.

A loading level of the positive electrode active material layer may be from about 10 mg/cm² to about 30 mg/cm², for example, from about 10 mg/cm² to about 25 mg/cm² or from about 10 mg/cm² to about 20 mg/cm². Additionally, a mixture density of the positive electrode active material layer in the compressed final positive electrode may be from about 3.3 g/cc to about 3.8 g/cc, for example, from about 3.3 g/cc to about 3.5 g/cc, or from about 3.6 g/cc to about 3.8 g/cc. When applying a positive electrode active material according to some embodiments, it is advantageous to implement such a loading level and positive electrode active material layer density, and a positive electrode satisfying the loading level and mixture density within the above range is suitable for implementing a high-capacity, high-energy-density rechargeable lithium battery.

### Negative Electrode

The negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as it has conductivity and does not cause a chemical change in the rechargeable lithium battery and may be a copper foil having a thickness from about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based cathode active material, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping/dedoping lithium may be a Si-based negative electrode active material or a Sn-based negative electrode active material. The Si-based negative electrode active material may be silicon, a silicon-carbon composite, SiOx (0<x≤2), a Si-Q alloy (wherein Q is an element selected from an alkali metal, an alkaline earth metal, a Group 13 element, a Group 14 element (excluding Si), a Group 15 element, a Group 16 element, a transition metal, a rare earth element, and a combination thereof, and, for example, Q may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include secondary particles (core particles) in which silicon primary particles are assembled and may include an amorphous carbon coating layer (shell) on the surface of the secondary particle. The amorphous carbon may also be present between the silicon primary particles; for example, the silicon primary particles may be coated with amorphous carbon. The secondary particles may exist dispersed in an amorphous carbon matrix.

The silicon-carbon composite may further include crystalline carbon. The silicon-carbon composite may include core particles including crystalline carbon and silicon particles and an amorphous carbon coating layer on the surface of the core particles. The crystalline carbon may be artificial graphite, natural graphite, or a combination thereof. The amorphous carbon may include soft carbon or hard carbon, a mesophase pitch carbonized product, calcined coke, etc.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm, or from about 10 nm to about 200 nm. The silicon particles may be present as silicon alone, in the form of a silicon alloy, or in an oxidized form. The oxidized form of the silicon may be represented as SiOₓ (0<x≤2). The atomic content ratio of Si:O, which indicates the degree of oxidation, may be about 99:1 to about 33:67. As used herein, when a definition is not otherwise provided, an average particle diameter D₅₀ indicates a diameter of particle where an accumulated volume is about 50 vol% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be about 1:99 to about 90:10 by weight.

The negative electrode active material may be included in an amount from about 90 wt% to about 99.8 wt%, or from about 94 wt% to about 99 wt%, based on 100 wt% of the negative electrode active material layer.

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

An electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes; and the like.

The non-aqueous organic solvent may be used alone or in a mixture of two or more types, and, when two or more types are used in a mixture, a mixing ratio can be appropriately adjusted according to the desired battery performance.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve the cycle-life of the rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers from 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, the rechargeable lithium battery may perform well, and lithium ions may move effectively.

### Separator

Depending on the type of the rechargeable lithium battery, a separator may be present between the positive electrode and the negative electrode. The separator may include polyethylene, polypropylene, polyvinylidene fluoride, a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (e.g., TEFLON^{®}), or a copolymer or mixture of two or more thereof.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide and a second structural unit including a structural unit derived from (meth)acrylic acid or (meth)acrylate and/or including a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the inorganic material is not limited thereto. An average particle diameter D₅₀ of the inorganic particles may be from about 1 nm to about 2000 nm, such as, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm, or from about 1 µm to about 5 µm.

Examples and comparative examples of the present disclosure are described below. However, the present disclosure is not limited to the following examples and comparative examples.

### Preparation Examples 1 to 8: Preparation of First Positive Electrode Active Material

As a tungsten-doped nickel-based precursor, a first nickel-based composite oxide having a composition of Ni_{0.9795}Co_{0.02}W_{0.0005}O₂ µm in the form of secondary particles with an average particle diameter D₅₀ of about 15 µm in which a plurality of primary particles was agglomerated was prepared.

The first nickel-based composite oxide was dry-mixed with LiOH as a lithium raw material, Al₂O₃ as an aluminum raw material, and H₃BO₃ as a boron raw material and then was first fired at a temperature shown in Table 1 below for 16 hours, resulting in a first positive electrode active material.

Herein, the lithium raw material was added in an amount of 100 parts by mole based on 100 parts by mole of total metal of the first nickel-based composite oxide, and the aluminum and boron raw materials were added in each input amount shown in Table 1 based on 100 parts by mole of the total metal of the first nickel-based composite oxide.

When the first positive electrode active materials according to Preparation Examples 1 to 8 were sieved, if the naked eye could perceive white powder on the first positive electrode active material, it was confirmed that the aluminum raw material was neither doped nor coated to form a coating layer on the surface of the first lithium nickel-based composite oxide but separated, which was used to check whether or not aluminum coating was formed. In general, when a tungsten-doped nickel-based precursor is used to coat with boron, there is no problem that the boron is not coated. Accordingly, whether a coating layer was formed or not depended on whether aluminum was coated or not. In addition, whether the aluminum was coated or not depending on a first firing temperature was shown in Table 1 below. If no white powder remained on the sieve (that is, the aluminum and boron coatings were present), "∘" was given, if the white powder remained (that is, the aluminum and/or boron coating was not present), "X" was given.

**(Table 1)**

| | Input amount (based on a total metal 100 parts by mole in first nickel-based composite oxide) | | Content (based on 100 mol% of total metal in the first positive electrode active material excluding lithium) | | Aluminum coating depending on first firing temperature | | | | | |
|---|---|---|---|---|---|---|---|---|---|---|
| | Aluminum of aluminum raw material (parts by mole) | Boron of boron raw material (parts by mole) | Aluminum (mol%) | Boron (mol%) | 720 °C | 730 °C | 740 °C | 750 °C | 760 °C | 770 °C |
| Preparation Example 1 | 1.5 | 0 | 1.48 | 0 | X | X | X | X | X | X |
| Preparation Example 2 | 1.5 | 1.75 | 1.45 | 1.69 | X | X | X | X | X | X |
| Preparation Example 3 | 1 | 1 | 0.98 | 0.98 | X | X | X | X | X | X |
| Preparation Example 4 | 1 | 1.25 | 0.98 | 1.22 | X | ○ | ○ | ○ | ○ | ○ |
| Preparation Example 5 | 1 | 1.5 | 0.98 | 1.46 | X | ○ | ○ | ○ | ○ | ○ |
| Preparation Example 6 | 1 | 1.75 | 0.97 | 1.7 | X | ○ | ○ | ○ | ○ | ○ |
| Preparation Example 7 | 0.5 | 1 | 0.5 | 1 | ○ | ○ | ○ | ○ | ○ | ○ |
| Preparation Example 8 | 0.5 | 1.75 | 0.49 | 1.7 | ○ | ○ | ○ | ○ | ○ | ○ |

Referring to Table 1, Preparation Examples 1 to 2, in which an excessive amount (1.5 parts by mole) of aluminum of the aluminum raw material was added, were confirmed that an aluminum coating layer was not formed, regardless of an addition amount of the boron raw material and the first firing temperature. On the other hand, Preparation Examples 3 to 6, in which aluminum of the aluminum raw material was added in an amount of 1 part by mole, which was smaller than that of Preparation Examples 1 to 2, were confirmed that whether an aluminum coating layer was formed or not varied depending on an addition amount of the boron raw material. Preparation Example 3, in which 1 part by mole of boron of the boron raw material was added, exhibited that an aluminum coating layer was not formed, but Preparation Examples 4 to 6, in which 1.25 parts by mole to 1.75 parts by mole of boron of the boron raw material was added, exhibited that the aluminum coating layer was formed.

On the other hand, Preparation Examples 7 to 8, in which 0.5 parts by mole of boron of the boron raw material was added, exhibited that an aluminum coating layer was formed, regardless of an amount of boron, but, when aluminum of the aluminum raw material was added in a small amount such as 0.5 parts by mole, aluminum was coated in a relatively small amount, making it difficult to improve structural stability.

Thus, it was confirmed that, when a tungsten-doped nickel-based precursor was used, it was necessary to adjust each addition amount of aluminum of the aluminum raw material and boron of the boron raw material within an appropriate range to form an aluminum coating layer. Specifically, when aluminum of the aluminum raw material was added in an amount of 0.1 parts by mole to 1.45 parts by mole based on 100 parts by mole of total metal in the tungsten-doped nickel-based precursor, and when boron of the boron raw material was introduced in an amount of about 1.05 parts by mole to about 2 parts by mole based on 100 parts by mole of the total metal in the tungsten-doped nickel-based precursor, it was confirmed that an aluminum coating layer was formed when exceeding an appropriate firing temperature.

On the other hand, on the premise that each input amount of the aluminum raw material and the boron raw material were appropriately adjusted, Preparation Examples 4 to 6 were confirmed to exhibit that an aluminum coating layer was not formed at a first firing temperature of 720°C. Rather, the aluminum coating layer was formed at the first firing temperature of 730°C or higher.

Thus, when using a tungsten-doped nickel-based precursor, it was confirmed that not only did the input amounts of the aluminum raw material and the boron raw material need to be adjusted, but it was also necessary to adjust the first firing temperature to form an aluminum coating layer, wherein the first firing temperature specifically needed to be adjusted to greater than 720°C.

The positive electrode active materials of Preparation Examples 1 to 3, 7, and 8, in which an aluminum coating layer was not formed or was coated in a relatively small amount, were disadvantageous in securing structural stability of the rechargeable lithium battery, wherein a battery performance evaluation was not conducted.

On the other hand, in order to confirm a more optimal firing temperature, Preparation Example 6 was selected among Preparation Examples 4 to 6 in which an aluminum coating layer was formed in an appropriate amount, so that the first positive electrode active material of Preparation Example 6 (obtained by firing at a first firing temperature shown in Table 1) was used to prepare a composite positive electrode active material and manufacture a rechargeable lithium battery cell in a method described below and to additionally evaluate performance of the rechargeable lithium battery. When fired at 720°C among the first firing temperatures, an aluminum coating layer was not formed, but the first positive electrode active materials, in which the aluminum coating layer was formed by firing at 730°C, 740°C, 750°C, 760°C, and 770°C, were sequentially designated as Preparation Examples 6-1, 6-2, 6-3, 6-4, and 6-5.

### Example 1-1

### (1) Preparation of Composite Positive Electrode Active Material

A composite positive electrode active material was prepared by mixing Preparation Example 6-1 as a first positive electrode active material and LiNi_{0.916}Co_{0.072}Mn_{0.011}O₂ in the form of single particles with an average particle diameter D₅₀ of about 3 µm as a second positive electrode active material in a weight ratio of 70:30.

### (2) Manufacturing of Rechargeable Lithium Battery Cell

The prepared composite positive electrode active material, polyvinylidene fluoride as a binder, and carbon nanotube as a conductive material were mixed in a weight ratio of 98.5:1:0.5 (i.e., composite positive electrode active material:binder:conductive material) and then, dispersed in N-methylpyrrolidone as a solvent to prepare a positive electrode active material layer slurry. This slurry was coated on an aluminum thin film and then dried and compressed to manufacture a positive electrode.

To manufacture a rechargeable lithium battery cell in a conventional method, the positive electrode was used with a lithium metal counter electrode as a negative electrode, polytetrafluoroethylene as a separator, and an electrolyte solution prepared by dissolving 1 M LiPF₆ in a mixed solvent of ethylene carbonate and dimethyl carbonate in a volume ratio of 3:7.

### Examples 1-2 to 1-5

A composite positive electrode active material and a rechargeable lithium battery cell were manufactured substantially in the same manner as in Example 1-1 except that Preparation Examples 6-2 to 6-5 were respectively used instead of Preparation Example 6-1 as a first positive electrode active material in '(1) Preparation of Composite Positive Electrode Active Material' of Example 1-1.

### Evaluation Example 1: SEM-EDS Quantitative Analysis

The first positive electrode active materials of Preparation Examples 6-1 to 6-5 were subjected to SEM-EDS analysis on the surface to measure amounts of Al and B elements based on 100 at% of total metal excluding lithium on the first positive electrode active material surface, and the results are shown in Table 2. Herein, the SEM-EDS analysis was performed by using FEI Titan 80-300 made by Philips N.V. under an acceleration voltage condition of 15 kV.

The analysis was performed by using FEI Titan 80-300 under an acceleration voltage condition of 15 kV.

**(Table 2)**

| | Al (at%) | B (at%) |
|---|---|---|
| Preparation Example 6-1 | 0.5 | 1.1 |
| Preparation Example 6-2 | 0.9 | 1.3 |
| Preparation Example 6-3 | 1.1 | 1.5 |
| Preparation Example 6-4 | 1.1 | 1.5 |
| Preparation Example 6-5 | 1.2 | 1.4 |

### Evaluation Example 2: Evaluation of Initial Charge/discharge Capacity and Efficiency

The rechargeable lithium battery cells of Examples 1-1 to 1-5 were evaluated with respect to initial charge and discharge capacity and its efficiency as follows.

The cells were charged to an upper limit voltage of 4.3 V at 0.2 C-rate and discharged to a cut-off voltage of 3.0 V at the 0.2 C-rate at room temperature (25°C) for initial charge and discharge. The initial charge/discharge efficiency was calculated according to Equation 1, and the results are shown in Table 3 below. [Equation 1] $Efficiency \left[%\right] = \left[initial discharge capacity/initial charge capacity\right] \times 100$

### Evaluation Example 3: Evaluation of High-Temperature Cycle-Life

The rechargeable lithium battery cells of Examples 1-1 to 1-5 were evaluated with respect to high-temperature cycle-life as follows.

After the initial charge and discharge, the cells were 50 cycles repeatedly charged and discharged within a voltage range of 3.0 V to 4.3 V at the 0.2 C-rate at 45°C. Herein, the high-temperature cycle-life evaluation was calculated according to Equation 2, and the results are shown in Table 3. [Equation 2] 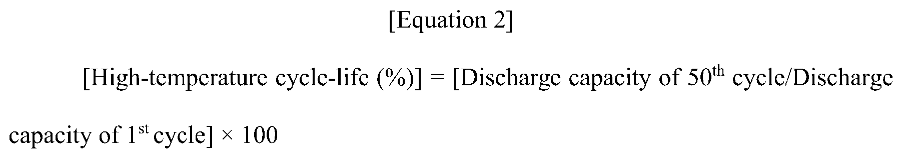 [High-temperature cycle-life (%)] = [Discharge capacity of 50th cycle/Discharge capacity of 1st cycle] × 100

**(Table 3)**

| | Type of first positive electrode active material | Evaluation of rechargeable lithium battery cell performance | | | |
|---|---|---|---|---|---|
| | | Initial charge capacity (mAh/g) | Initial discharge capacity (mAh/g) | Initial charge/discharge efficiency (%) | High-temperature cycle-life (%) |
| Example 1-1 | Preparation Example 6-1 | 248.3 | 222.6 | 89.6 | 95 |
| Example 1-2 | Preparation Example 6-2 | 249 | 224.8 | 90.3 | 95.9 |
| Example 1-3 | Preparation Example 6-3 | 247.8 | 224.3 | 90.5 | 96 |
| Example 1-4 | Preparation Example 6-4 | 246.7 | 222.2 | 90.1 | 95.6 |
| Example 1-5 | Preparation Example 6-5 | 244.5 | 219.5 | 89.8 | 95.3 |

Referring to Table 3, Examples 1-1 to 1-5-which included a large-particle first positive electrode active material simultaneously coated with aluminum and boron and a small-particle second positive electrode active material-were confirmed to exhibit excellent overall battery performance in the initial charge/discharge capacity, initial charge/discharge capacity efficiency, and high-temperature cycle-life evaluations. Among them, it was confirmed that Examples 1-2 and 1-3 were further improved in terms of an initial charge/discharge capacity, an initial charge/discharge efficiency, and a high-temperature cycle-life. Thus, in the preparation of first positive electrode active material, when 1 part by mole of aluminum of the aluminum raw material based on 100 parts by mole of the total metal in the tungsten-doped nickel-based precursor and 1.75 parts by mole of the boron of the boron raw material based on 100 parts by mole of the total metal in the tungsten-doped nickel-based precursor were added, it was confirmed that an optimal firing temperature was within a range of 740°C to 750°C. Preparation Examples 4 to 5, in which an input amount of boron varied, should be understood to exhibit a similar optimal firing temperature trend as that of Preparation Example 6, but firing temperatures may vary depending on an amount of boron.

While this invention has been described in connection with what is presently considered to be some practical exemplary embodiments, the invention is not limited to the above-disclosed embodiments. Rather, the present disclosure is intended to additionally cover various modifications and equivalent arrangements to the above-described embodiments.

### <Description of Symbols>

| | | | |
|---|---|---|---|
| 1: | secondary particle | 2: | internal portion of secondary particle |
| 3: | primary particle | 4: | external portion of secondary particle |
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A composite positive electrode active material comprising:
a first positive electrode active material comprising a first lithium nickel-based composite oxide comprising:
tungsten;
aluminum, wherein an amount of the aluminum in the first positive electrode active material is from 0.1 mol% to 1.45 mol% based on 100 mol% of a total metal in the first positive electrode active material excluding lithium; and
boron, wherein an amount of the boron in the first positive electrode active material is from 1.05 mol% to 2 mol% based on 100 mol% of the total metal in the first positive electrode active material excluding lithium; and
a second positive electrode active material comprising a second lithium nickel-based composite oxide having an average particle diameter D₅₀ smaller than an average particle diameter D₅₀ of the first positive electrode active material.

2. The composite positive electrode active material as claimed in claim 1, wherein the first lithium nickel-based composite oxide is represented by:
Liₐ₁Niₓ₁M¹_{y1}W_{w1}Alₖ₁Bₕ₁O_{2-b1}X_{b1},
wherein,0.9≤a1≤1.2, 0.3≤x1≤0.9884, 0≤y1≤0.6884, 0.0001≤w1≤0.001, 0.001≤k1≤0.0145, 0.0105≤h1≤0.02, 0.9≤x1+y1+w1+k1+h1≤1.1, and 0≤b1≤0.1,
wherein M¹ is Ba, Ca, Ce, Co, Cr, Cu, Fe, Mg, Mn, Mo, Nb, Si, Sn, Sr, Ta, Ti, V, Y, Zn, Zr, or a combination thereof, and
wherein X is F, P, S, or a combination thereof; and wherein, in preferred embodiments,
an amount of nickel in the first lithium nickel-based composite oxide based on 100 mol% of a total metal in the first lithium nickel-based composite oxide excluding lithium is greater than or equal to 80 mol%, and/or
the first lithium nickel-based composite oxide is doped with tungsten, and
wherein a doping amount of the tungsten in the first lithium nickel-based composite oxide is from 0.01 mol% to 0.1 mol% based on 100 mol% of a total metal in the first lithium nickel-based composite oxide excluding lithium.

3. The composite positive electrode active material as claimed in claim 1, wherein the first positive electrode active material is in a form of secondary particles,
wherein the secondary particles are each an agglomeration of primary particles, and
wherein the aluminum and boron are doped in an internal portion of the first lithium nickel-based composite oxide and are further comprised in a coating layer on a surface of each secondary particle; wherein, in preferred embodiments,
the first positive electrode active material has an amount of aluminum from 0.1 at% to 10 at% on the surface of each secondary particle based on a total metal excluding lithium on the surface of each secondary particle, and
wherein the first positive electrode active material has an amount of boron from 0.1 at% to 10 at% on the surface of each secondary particle based on a total metal excluding lithium on the surface of each secondary particle; and/or
the coating layer comprises:
an aluminum-containing material comprising aluminum metal, aluminum oxide, aluminum hydroxide, aluminum oxyhydroxide, lithium aluminum oxide, or a combination thereof; and
a boron-containing compound comprising boron oxide, boric acid, lithium borate, or a combination thereof; and/or
the first positive electrode active material further comprises a grain boundary coating portion located on the surfaces of the primary particles internal to the secondary particles, the grain boundary coating portion containing aluminum and boron; and/or an average particle diameter D₅₀ of the secondary particles is from 10 µm to 25 µm.

4. The composite positive electrode active material as claimed in claim 1, wherein the second lithium nickel-based composite oxide is represented by:
Liₐ₄Niₓ₄M⁶_{y4}M⁷_{z4}O_{2-b4}X_{b4},
wherein 0.9≤a4≤1.8, 0.3≤x4≤1, 0≤y4≤0.7, 0≤z4≤0.7, 0.9≤x4+y4+z4≤1.1, and 0≤b4≤0.1,
wherein M⁶ and M⁷ are different from each other and are Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and
wherein X is F, P, S, or a combination thereof.

5. The composite positive electrode active material as claimed in claim 1, wherein the second positive electrode active material is in a form of single particles, and
wherein an average particle diameter D₅₀ of the single particles is from 0.1 µm to 9 µm.

6. The composite positive electrode active material as claimed in claim 1, wherein the composite positive electrode active material comprises the first positive electrode active material in an amount from 50 wt% to 95 wt% based on 100 wt% of the composite positive electrode active material, and
wherein the composite positive electrode active material comprises the second positive electrode active material in an amount from 5 wt% to 50 wt% based on 100 wt% of the composite positive electrode active material.

7. A method of preparing a composite positive electrode active material, the method comprising:
mixing a tungsten-doped nickel-based precursor, a lithium raw material, an aluminum raw material, and a boron raw material to obtain a mixture, wherein aluminum of the aluminum raw material is introduced in the mixture in an amount from 0.1 parts by mole to 1.45 parts by mole based on 100 parts by mole of a total metal in the tungsten-doped nickel-based precursor, and wherein boron of the boron raw material is introduced in the mixture in an amount from 1.05 parts by mole to 2 parts by mole based on 100 parts by mole of a total metal in the tungsten-doped nickel-based precursor;
firing the mixture at a temperature of greater than 720°C to prepare a first positive electrode active material comprising a first lithium nickel-based composite oxide comprising tungsten, aluminum, and boron, wherein the aluminum of the first positive electrode active material derives from the aluminum raw material, and wherein the boron of the first positive electrode active material derives from the boron raw material; and
mixing the first positive electrode active material and a second positive electrode active material comprising a second lithium nickel-based composite oxide having an average particle diameter D₅₀ smaller than an average particle diameter D₅₀ of the first positive electrode active material.

8. The method as claimed in claim 7, wherein the tungsten-doped nickel-based precursor comprises a tungsten-doped nickel-based oxide, a tungsten-doped nickel-based hydroxide, or a combination thereof.

9. The method as claimed in claim 7 or claim 8, wherein the tungsten-doped nickel-based precursor is a tungsten-doped nickel-based oxide represented by:
Niₓ₇M¹¹_{y7}M¹²_{z7}W_{w7}O₂,
wherein 0.3≤x7≤1, 0≤y7≤0.7, 0≤z7≤0.7, and 0.0001≤w7≤0.001, 0.9≤x7+y7+z7+w7≤1.1, and
wherein M¹¹ and M¹² are different from each other and are each Al, B, Ba, Ca, Ce, Co, Cr, Cu, Fe, Mg, Mn, Mo, Nb, Si, Sn, Sr, Ta, Ti, V, Y, Zn, Zr, or a combination thereof.

10. The method as claimed in claim 7, wherein an amount of nickel in the tungsten-doped nickel-based precursor is greater than or equal to 80 mol% based on 100 mol% of a total metal in the tungsten-doped nickel-based precursor; and
a doping amount of the tungsten in the tungsten-doped nickel-based precursor is from 0.01 mol% to 0.1 mol% based on 100 mol% of the total metal in the tungsten-doped nickel-based precursor.

11. The method as claimed in any one of claims 7-10, wherein firing the mixture is carried out in an oxidizing gas atmosphere at 730°C to 1000°C.

12. The method as claimed in any one of claims 7-11, wherein, after firing the mixture, the method further comprises:
washing a product resulting from the mixture after firing; and
performing an additional firing of the mixture at a temperature from 500°C to 730°C.

13. The method as claimed in any one of claims 7-12, wherein mixing the first positive electrode active material and the second positive electrode active material comprises creating a mixing weight ratio of the first positive electrode active material and the second positive electrode active material that is, respectively, from 50:50 to 95:5.

14. A rechargeable lithium battery comprising:
a positive electrode comprising:
a positive electrode current collector; and
a positive electrode active material layer disposed on the positive electrode current collector, the positive electrode active material layer comprising the composite positive electrode active material as claimed in any one of claims 1-6;
a negative electrode; and
an electrolyte.
